# EUROPÄISCHE PATENTSCHRIFT

(11) **EP 2 617 334 B1**
(45) Veröffentlichungstag und Bekanntmachung des Hinweises auf die Patenterteilung: **22.08.2018**
(21) Anmeldenummer: 12199402.4
(22) Anmeldetag: 27.12.2012
(51) Int. Cl.: A47J 31/44

(54) **Milchschaumdüse mit Sirupzufuhr**
Milk foaming nozzle with sirup feed
Buse de mousse de lait avec alimentation en sirop

(30) Priorität: 19.01.2012 DE 102012200742
(43) Veröffentlichungstag der Anmeldung: 24.07.2013
(73) Patentinhaber: BSH Hausgeräte GmbH, 81739 München (DE)
(72) Erfinder: Strobl, Robert, 83246 Unterwössen (DE); Tracy, Timothy Mark, 83352 Altenmarkt (DE); van den Woldenberg, Anja, 89518 Heidenheim (DE)

(56) Entgegenhaltungen:
- DE-A1-102009 013 937
- US-A1- 2006 286 262

## Beschreibung

Die Erfindung betrifft eine Milchschaumdüse für einen Kaffeevollautomaten für Haushaltszwecke. Eine Milchschaumdüse umfasst regelmäßig eine Dampfdüse, in der heißer Wasserdampf unter Druck zum Ansaugen der Milch eingeleitet wird. Viele Milchschaumdüsen verfügen außerdem über einen dritten Eingang für eine Luftzufuhr, um anschließend die Milch mit der Luft zu einem standfähigen Milchschaum zu vermischen. Sie sind regelmäßig abnehmbar und oft zerlegbar, um sie nach Gebrauch vor allem von Milchresten gründlich reinigen zu können.
Die DE 10 2009 013 937 A1 beschreibt eine Aufschäumvorrichtung zum Aufschäumen von Milch mit einem in eine Mischkammer mündenden Dampfzuführkanal, mit einem in die Mischkammer mündenden Milchzuführkanal sowie mit einem Luftzuführkanal, wobei die Mischkammer kommunizierend mit einer Schäumkammer verbunden ist. Der Luftzuführkanal mündet in die Schäumkammer, um eine nahezu gleiche Ausgabetemperatur von Milchschaum und Milch zu erreichen. Über den Luftzuführkanal oder einen separaten Kanal kann alternativ auch ein Wasser-Dampf-Gemisch, nur Dampf, nur Wasser, ein Geschmacksgeber oder ein Reinigungsmittel zugeführt werden
Aufgabe der Erfindung ist es daher, eine bequemere Möglichkeit für die Variation von kaffeebasierten Getränken zu bieten.

Diese Aufgabe wird durch eine Milchschaumdüse gemäss Anspruch 1 gelöst. Mit dem weiteren Eingang verfügt sie über eine weitere Schnittstelle für die Verarbeitung von Inhaltsstoffen eines Kaffeegetränks. Der weitere Eingang muss dafür keine Leitung oder Leitungskopplung darstellen, er kann auch in jeder anderen Zugabemöglichkeit bestehen, beispielsweise in einer Öffnung für eine händische Zugabe. Denn die Erfindung wendet sich davon ab, die Variation eines kaffeebasierten Getränks durch die Zugabe von Aromazusätzen in die Milch, in die Tasse oder dergleichen zu erreichen. Sie verfolgt vielmehr das Prinzip, einen weitere Zufuhrmöglichkeit an der Milchschaumdüse zu schaffen. Für die Zubereitung des abgewandelten Kaffeegetränks braucht dennoch maximal ein zusätzlicher Arbeitsschritt erforderlich zu werden, nämlich für die Herstellung der Zufuhr von Sirup, weil die Sirupzugabe selbst während des Ablaufs des herkömmlichen Zubereitungsprozess erfolgt. Die Erfindung macht sich die Erkenntnis zunutze, dass bereits die Milchschaumdüse selbst eine Einrichtung zur Variation eines Kaffeegetränks darstellt, die erfindungsgemäß ohne großen zusätzlichen konstruktiven Aufwand, aber mit großem zusätzlichen Nutzen um eine weitere Funktion ergänzt werden kann. Denn dafür lassen sich bekannte Technologien sowohl für die Einspeisung von Sirup in den Verarbeitungsprozess als auch für die Verarbeitung von Sirup verwenden.
Als Naturprodukt wird die Milch in unveränderter Form der Milchschaumdüse zugeleitet. Sirup dagegen kann aus Platzgründen in konzentrierter Form bereitgehalten und eingesetzt werden. Dafür muss er allerdings regelmäßig verdünnt werden, um einem Getränk zugegeben werden zu können. Erfindungsgemäß ist der weitere Eingang für die Sirupzufuhr stromauf der Mischkammer angeordnet. Dadurch kann ein zuverlässiges Aufmischen bzw. Vermischen und Verflüssigen des regelmäßig viskosen Sirups erfolgen, so dass er nicht unvermischt und damit konzentriert in das zubereitete Getränk gelangt. Anders als die Milch, die als regelmäßiger Bestandteil eines Kaffeegetränks dient, das mit Hilfe einer Milchschaumdüse zubereitet wird, soll Sirup in verschiedenen Geschmacksrichtungen angeboten und verarbeitet werden können. Daher bietet es sich an, den Sirup in kleineren Portionen für ein oder wenige Kaffeegetränke anzubieten. Damit kann nach der Zubereitung eines ersten Kaffeegetränks mit einer ersten Rezepturvariante ein weiteres Kaffeegetränk mit einer anderen Rezeptur zubereitet werden, weil zwischen den Zubereitungsvorgängen die Sirupzufuhr variiert werden kann. Nach einer weiteren vorteilhaften Ausgestaltung der Erfindung kann die Milchschaumdüse daher über eine separate, aber in die Milchschaumdüse integrierte Kammer verfügen, die als werkseitig mit Sirup befüllter Behälter in die Milchschaumdüse integriert ist. Der Behälter kann Sirup für eine Getränkeportion enthalten. Nach der Zubereitung des Kaffeegetränks kann die komplette Milchschaumdüse abgenommen und durch eine herkömmliche Milchschaumdüse oder eine solche mit einem anderen bereits mit Sirup befüllten Behälter ausgewechselt werden. Je Sirupprodukt kann also eine eigene Milchschaumdüse angeboten werden. Sie muss dabei nicht auf die Zubereitung nur eines Kaffeegetränks limitiert sein, sondern kann beispielsweise auch für zwei oder mehr Zubereitungsvorgänge geeignet sein. Damit kann eine einfache Zubereitung von Varianten für Kaffeegetränke angeboten werden, weil die verwendete Milchschaumdüse nicht aufwändig von Milch und ggf. Sirupresten gereinigt werden muss. Vor allem weitere zubereitete Getränke können nicht durch verbleibende Reste von Sirup verfälscht oder geschmacklich beeinträchtigt werden. Außerdem kann die Milchschaumdüse konkret auf die jeweilige Sirupkonsistenz und -menge konstruktiv abgestimmt werden, um ein optimales Zubereitungsergebnis zu erhalten. Damit lässt sich eine sehr bequeme Bedienung des Kaffeevollautomaten erreichen, der eine hohe Varianz an Kaffeerezepturen bietet.
Da der Sirup in die Mischkammer transportiert werden muss, bietet es sich an, die separate Kammer in ihrer unmittelbaren Nähe anzuordnen und sie ebenfalls durch Unterdruck zu entleeren. Alternativ kann die separate Kammer durchströmt werden, um den Sirup in der Milchschaumdüse zu verarbeiten. Vorteilhafterweise kann die Unterdruckkammer oder die Mischkammer selbst werkseitig mit Sirup befüllt sein, womit sich kaum konstruktive Änderungen der Milchschaumdüse an sich ergeben. Die Versiegelung der befüllten Schaumdüse und ihre Deaktivierung bei Benutzung erfolgt in im Stand der Technik an sich bekannter Weise.
Nach einer dazu alternativen Ausgestaltungsform kann die erfinderische Milchschaumdüse als System mit einem separaten Sirupbehälter bzw. einer Sirupkapsel zusammenwirken, indem die Milchschaumdüse über eine fluidische Kopplungsvorrichtung des Sirupbehälters mit der Milchschaumdüse verfügt. Nach der Zubereitung eines Kaffeegetränks unter der Zugabe von Sirup muss folglich nicht die komplette Milchschaumdüse entsorgt werden, sondern lediglich der entleerte Behälter für den Sirup. Die Kopplungsvorrichtung kann zumindest eine fluidische Leitungsverbindung zwischen dem Sirupbehälter und der Milchschaumdüse zur Verfügung stellen. Vorzugsweise koppelt sie den Sirupbehälter auch mechanisch an der Milchschaumdüse, damit keine zusätzliche Betätigung einer Befestigung des Sirupbehälters während des Zubereitungsvorgangs erforderlich ist. Mit einem separaten Sirupbehälter kann dieselbe Milchschaumdüse für zahlreiche Zubereitungsvorgänge mit und ohne Sirup benutzt werden.
Nach einer weiteren vorteilhaften Ausgestaltungsform der Erfindung kann der Sirupbehälter Bestandteil des ersten oder zweiten Eingangs, nämlich der Dampf- oder Milchzufuhr, als Mischkammer der Milchschaumdüse oder als Unterdruckkammer in die Milchschaumdüse reversibel einsetzbar und entnehmbar sein. An jedem dieser Einsatzorte wird der Sirupbehälter von Dampf und/oder Milch durchströmt und dadurch entleert. Der weitere Eingang der Milchschaumdüse bietet dann einen separaten Zugang zum ersten oder zweiten Eingang, zur Mischkammer oder zur Unterdruckkammer. Ein Benutzer kann den separaten Zugang bedienen, um den Sirupbehälter einzusetzen. Dieselbe Milchschaumdüse kann folglich für die Zubereitung unterschiedlicher sirupmodifizierter Kaffeegetränke dienen, weil je nach Sirupzugabe unterschiedliche Behälter in die Milchschaumdüse eingesetzt werden können. Wird kein Sirupbehälter eingesetzt, arbeitet die Milchschaumdüse wie bekannt. Ist der Sirup im Behälter aufgebraucht, kann er entnommen, entsorgt und durch einen neuen, befüllten Behälter ersetzt werden.
Alternativ kann der Behälter Funktionen der Milchschaumdüse unterstützen oder ermöglichen, indem er selbst beispielsweise die Mischkammer zur Vermischung von Dampf, Milch und Sirup darstellt. Insbesondere als Mischkammer der Milchschaumdüse erübrigt sich mit dem Auswechseln des Behälters zugleich eine Reinigung der Milchschaumdüse von Sirupresten.
Nach einer dazu alternativen Ausgestaltungsform der Erfindung kann der separate Behälter zumindest fluidisch mit der Milchschaumdüse gekoppelt sein und selbst über eine Pumpvorrichtung verfügen, mit der der Sirup über den weiteren Eingang in die Unterdruckkammer pumpbar ist. Der Behälter für den Sirup wird folglich bei einer Getränkezubereitung nicht durchströmt, sondern gibt seinen Inhalt über die Pumpvorrichtung gezielt in die Milchschaumdüse ab. Damit kann der Sirupbehälter dauerhaft mit der Milchschaumdüse gekoppelt sein, ohne zwingend bei jedem Zubereitungsvorgang selbsttätig aktiviert zu werden. Vielmehr kann der Benutzer durch Betätigung der Pumpvorrichtung entscheiden, wann ein Kaffeegetränk durch die Zugabe von Sirup variiert werden soll. Eine aufwändige Pumpvorrichtung kann im Kaffeevollautomaten integriert und motorisch ausgebildet sein. Eine einfache Pumpvorrichtung kann aus einem mechanischen bzw. händischen Komprimieren des Behälters für den Sirup bestehen.
Nach einer weiteren vorteilhaften Ausgestaltung der Erfindung verfügt der Sirupbehälter über eine Dosiervorrichtung für eine dosierte Abgabe des Sirups in die Milchschaumdüse. Damit kann der Sirupbehälter eine größere Menge an Sirup als nur für einen Zubereitungsvorgang bevorraten, ohne nach jeder Getränkezubereitung ausgetauscht oder erneut befüllt werden zu müssen. Außerdem kann die Zugabemenge des Sirups von Zubereitungsvorgang zu Zubereitungsvorgang variiert werden, um unterschiedliche Geschmacksintensitäten zu erzeugen. Damit bietet sich dem Benutzer eine weitere Variationsmöglichkeit für die Zubereitung von sirupmodifizierten Kaffeegetränken.

Nach einer weiteren vorteilhaften Ausgestaltung der Erfindung kann der weitere Eingang für die Sirupzufuhr als Bestandteil der Kopplungsvorrichtung in die Unterdruckkammer münden. Ist der Behälter für den Sirup fluidisch an die Unterdruckkammer gekoppelt, so wirkt beim Aktivieren der Milchschaumdüse der Unterdruck auch auf ihn. Damit kann sich eine Pumpvorrichtung für den Sirup aus dem Behälter in die Milchschaumdüse erübrigen. Vielmehr lässt sich der Sirup bei Einsatz der Milchschaumdüse selbsttätig und im Prinzip vergleichbar der Milchzufuhr ansaugen.
Nach einer weiteren vorteilhaften Ausgestaltung der Erfindung ist der Innenraum des Sirupbehälters beim Entleeren volumenkompressibel. Die Kompressibilität des Innenraums des Sirupbehälters muss jedenfalls bei seinem Entleeren sichergestellt sein. Für einen Transportzustand des Sirupbehälters dagegen kann ihn ggf. eine stabile, nicht kompressible Umverpackung oder dergleichen als Hülle schützen. Mit fortschreitender Entnahme von Sirup zieht sich der Behälter zusammen, damit ihm ausschließlich Sirup und nicht etwa beispielsweise Luft entnommen werden kann, die eine Rezeptur verfälschen könnte. Damit muss die Milchschaumdüse hinsichtlich ihrer Luftzufuhr in Abhängigkeit von einer Sirupzugabe nicht geändert werden oder anpassbar sein.

Der Sirupbehälter ist nach einer weiteren vorteilhaften Ausgestaltungsform der Erfindung beispielsweise flexibel, d. h. seine Behälterwandungen sind verformbar, so dass er sich beim Entleeren zusammenfaltet. Der Sirupbehälter kann beispielsweise einen Folienbeutel oder ein Zylinder umfassen, der einen durch Unterdruck verschiebbaren Kolben enthält. Aus optischen Gründen kann der Sirupbehälter eine formstabile Umverpackung aufweisen, so dass sich das Zusammenziehen des Folienbeutels oder das Verschieben des Kolbens für den Benutzer unsichtbar abspielen und nicht die Gefahr der Manipulation durch den Benutzer betsteht.

Nach einer dazu alternativen Ausgestaltungsform der Erfindung kann die Kopplungsvorrichtung über eine Perforiervorrichtung verfügen, die beim Ankoppeln des Sirupbehälters eine Luftzufuhr im Sirupbehälter schafft. Die Durchmesser des weiteren Eingangs für die Sirupzufuhr und für die Luftzufuhr im Sirupbehälter sind dann so zu bemessen, dass zum Leeren des Sirupbehälters die gleiche Zeit benötigt wird, wie ein selbständiger Schäumprozess dauert. Andernfalls würde über den leeren Sirupbehälter zusätzliche Luft angesaugt werden, die das Schäumergebnis verfälschen könnte.

Die fluidische und ggf. mechanische Kopplungsvorrichtung für den Sirupbehälter muss nicht zwingend an der Milchschaumdüse angebracht sein. Vielmehr kann am Kaffeevollautomaten eine separate Aufnahmevorrichtung, beispielsweise eine Einbuchtung bzw. eine Kapselbucht angeordnet sein, in die der Sirupbehälter beim Starten des Zubereitungsvorgangs einzusetzen ist. Damit erleichtert sich die Bedienung des Kaffeevollautomaten, indem die Handhabung des Sirupbehälters vereinfacht wird.

Das Prinzip der Erfindung wird anhand einer Zeichnung beispielshalber noch näher erläutert. In der Zeichnung zeigen:
- Figur 1:: eine schematische Schnittansicht durch eine erfindungsgemäße Milchschaumdüse,
- Figur 2:: eine Schnittansicht durch einen Sirupbehälter.

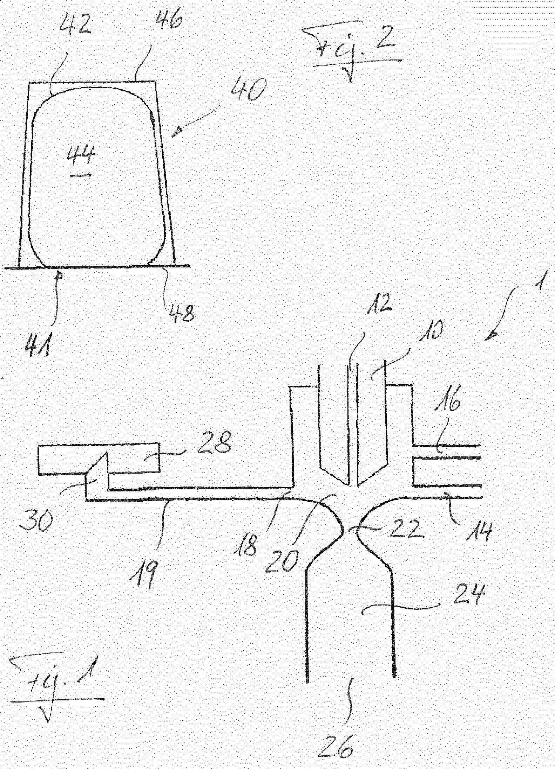

Eine Milchschaumdüse 1 gemäß Figur 1 umfasst eine Dampfdüse 10, die einen ersten Eingang 12 für die Dampfzufuhr darstellt. Nach dem Anschluss der Milchschaumdüse 1 an einem nicht dargestellten Kaffeevollautomaten, der den Dampf in bekannter Weise erzeugt und zur Milchschaumdüse leitet, ist sie unmittelbar einsatzbereit. Ein zweiter Eingang 14 dient der Milchzufuhr. Er stellt eine fluidische Verbindung zu einem internen oder externen Milchbehälter her, aus dem per Unterdruckerzeugung in der Milchschaumdüse 1 nach dem "Venturi-Prinzip" Milch angesaugt und in die Milchschaumdüse transportiert wird. Ein paralleler dritter Eingang 16 schafft eine Luftzufuhr.

Dem zweiten Eingang 14 und dem dritten Eingang 16 gegenüber liegt ein weiterer Eingang 18 für die Zufuhr von Sirup. Alle Eingänge 12, 14, 16, 18 münden in eine Unterdruckkammer 20, die ausgangsseitig eine Engstelle 22 aufweist. Die Engstelle 22 liegt in Strömungsrichtung des Dampfs stromab der Dampfdüse 10 und stromauf einer Mischkammer 24. Die Mischkammer 24 mündet ihrerseits stromab in einen Ausgang 26 in Richtung eines Getränkegefäßes.

Der weitere Eingang 18 für die Sirupzufuhr bindet über eine Leitung 19 an eine tellerförmige Kopplungsvorrichtung 28 als Aufstellfläche für einen Sirupbehälter 40 (vgl. Figur 2) an. Die Kopplungsvorrichtung 28 verfügt über einen zentralen Lochdorn 30, der an die Leitung 19 angeschlossen ist. Die Kopplungsvorrichtung 28 koppelt den Sirupbehälter 40 nicht nur fluidisch über den Lochdorn 30 an die Milchschaumdüse 1, sondern auch mechanisch an den Kaffeevollautomaten. Denn mit dem Aufsetzen des Sirupbehälters 40 auf der Kopplungsvorrichtung 28 wird er nicht nur geöffnet, sondern auch am Kaffeeautomaten gehaltert.

Figur 2 zeigt einen Sirupbehälter 40. Er verfügt über einen Folienbeutel 42, in dem sich Sirup 44 befindet. Den Folienbeutel 42 umgibt eine stabile becherförmige Hülle 46 aus Karton. An einer Unterseite 41 des Sirupbehälters 40, die zugleich seine Aufstellfläche darstellt, befindet sich eine plane Membran 48, vergleichbar dem Deckel eines Joghurtbechers, die eine Becheröffnung der Hülle 46 verschließt, über die der Folienbeutel 42 in die Hülle 46 einsetzbar ist. Die Membran 48 besteht beispielsweise aus einer Aluminiumfolie und verschließt neben der Hülle 46 vor allem den Folienbeutel 42.

Um Milchschaum zu erzeugen, wird durch den ersten Eingang 12 der Dampfdüse 10 Heißdampf aus dem Kaffeevollautomaten unter Druck in Richtung des Ausgangs 26 eingeleitet. Durch die Engstelle 22 bildet sich in der Unterdruckkammer 20 ein Unterdruck, der sowohl Milch über den zweiten Eingang 14 als auch Luft über den dritten Eingang 16 in die Unterdruckkammer einsaugt. Nachdem der Heißdampf, die Milch und die Luft die Engstelle 22 passiert haben, entspannt sich das Gemisch aus Dampf, Luft und Milch und verwirbelt in der Mischkammer 24 unter Bildung von Milchschaum. Er verlässt die Milchschaumdüse durch den Ausgang 26 und fließt in ein darunter abgestelltes Getränkegefäß.

Soll ein kaffeebasiertes Getränk geschmacklich verfeinert werden, wird vor dem Zubereitungsvorgang der Sirupbehälter 40 auf der Kopplungsvorrichtung 28 aufgesetzt. Die Kopplungsvorrichtung 28 bietet dem Sirupbehälter 40 nicht nur eine sichere Aufstandfläche, so dass er während des Zubereitungsvorgangs sicher gehalten ist. Sie stellt eine fluidische Kopplung des Sirupbehälters 40 mit der Milchschaumdüse 1 her, indem beim Aufsetzen des Sirupbehälters 40 auf die Kopplungsvorrichtung 28 der Lochdorn 30 die Membran 48 durchstößt und damit den Folienbeutel 42 öffnet. Er steht nun in fluidischer Verbindung mit dem weiteren Eingang 18. Mangels Luftzutritt und aufgrund der viskosen Konsistenz des Sirups 44 fließt er nicht selbsttätig durch den weiteren Eingang 18 in die Milchschaumdüse. Erst bei Inbetriebnahme der Milchschaumdüse 1, nämlich bei Einströmen des unter Druck stehenden Dampfs durch die Dampfdüse 10 saugt der dadurch entstehende Unterdruck in der Unterdruckkammer 20 Sirup 44 aus dem Sirupbehälter 40 an und leitet ihn in die Unterdruckkammer 20. Dort gelangt er genauso wie die Milch und die Luft aus dem zweiten Eingang 14 und dem dritten Eingang 16 durch die Engstelle 22 hindurch in die Mischkammer 24. Dort wird er durch die Druckentspannung mit der Milch, der Luft und dem heißen Dampf verwirbelt, vermischt und damit verflüssigt.

Mit zunehmender Entleerung des Sirupbehälters 40 zieht sich der Folienbeutel 42 zusammen, weil keine Luft oder dergleichen nachströmen kann. Damit wird auch ein unkontrollierter Luftzutritt über den weiteren Eingang 18 verhindert, so dass sich das Mischungsverhältnis in der Milchschaumdüse 1 zwischen Milch, Luft und Dampf nicht ungewollt verändert. Das Zusammenziehen des Folienbeutels 42 ist jedoch für den Benutzer nicht erkennbar, weil die stabile Hülle 46 außen um den Folienbeutel 42 die Entleerung nicht erkennen lässt. Damit besteht für den Benutzer auch nicht die Versuchung, den Prozess zum Beispiel durch Zusammendrücken des Folienbeutels 42 zu manipulieren.

Nach Abschluss des Zubereitungsvorgangs wird der inzwischen entleerte Sirupbehälter 40 von der Kopplungsvorrichtung 28 abgenommen und entsorgt. Die Milchschaumdüse 1 kann in gewohnter Weise vom Kaffeevollautomaten abgenommen werden und beispielsweise teilzerlegt in einer Spülmaschine gereinigt werden.
Da es sich bei der vorhergehenden, detailliert beschriebenen Milchschaumdüse um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen der Sirupkapsel und ihr Anschluss an die Milchschaumdüse in anderer Form als in der hier beschriebenen folgen. Ebenso kann die Milchschaumdüse in einer anderen Form ausgestaltet werden, wenn dies aus Platzgründen bzw. designerischen Gründen notwendig ist.

### Bezugszeichenliste

- 1: Milchschaumdüse
- 10: Dampfdüse
- 12: erster Eingang
- 14: zweiter Eingang (Milchzufuhr)
- 16: dritter Eingang (Luftzufuhr)
- 18: weiterer Eingang (Sirupzufuhr)
- 19: Leitung
- 20: Unterdruckkammer
- 22: Engstelle
- 24: Mischkammer
- 26: Ausgang
- 28: Kopplungsvorrichtung
- 30: Lochdorn
- 40: Sirupbehälter
- 41: Unterseite
- 42: Folienbeutel
- 44: Sirup
- 46: Hülle
- 48: Membran

## Patentansprüche

1. Abnehmbare Milchschaumdüse (1) für einen Kaffeevollautomaten für Haushaltszwecke mit einer Dampfdüse (10) als einem ersten Eingang (12) für eine Dampfzufuhr unter Druck, mit einem zweiten Eingang (14) für eine Milchzufuhr, mit einem dritten Eingang (16) für eine Luftzufuhr, mit einem Ausgang (26) in Richtung eines Getränkegefäßes und einem weiteren Eingang (18) für eine Sirupzufuhr, **dadurch gekennzeichnet, dass** alle Eingänge (12, 14, 16, 18) in eine Unterdruckkammer (20) münden, die ausgangsseitig eine Engstelle (22) aufweist, wobei die Engstelle (22) in Strömungsrichtung des Dampfs stromab der Dampfdüse (10) und stromauf einer Mischkammer (24) liegt, wobei die Mischkammer (24) stromab in den Ausgang (26) mündet.

2. Milchschaumdüse (1) nach Anspruch 1, **dadurch gekennzeichnet, dass** die Unterdruckkammer (20) als werkseitig mit Sirup befüllter Behälter in die Milchschaumdüse (1) integriert ist.

3. Milchschaumdüse (1) nach Anspruch 1 oder 2 mit einem separaten Sirupbehälter (40), **gekennzeichnet durch** eine fluidische Kopplungsvorrichtung (28) des Sirupbehälters (40) mit der Milchschaumdüse (1).

4. Milchschaumdüse (1) nach Anspruch 3, **dadurch gekennzeichnet, dass** der Sirupbehälter (40) als Bestandteil des zweiten Eingangs oder als Mischkammer oder als Unterdruckkammer in die Milchschaumdüse (1) einsetzbar und entnehmbar ist.

5. Milchschaumdüse (1) nach Anspruch 3, **gekennzeichnet durch** eine Pumpvorrichtung, mit der Sirup über den weiteren Eingang (18) in die Unterdruckkammer (20) pumpbar ist.

6. Milchschaumdüse (1) nach Anspruch 3 oder 5, **gekennzeichnet durch** eine Dosiervorrichtung im Sirupbehälter (40).

7. Milchschaumdüse nach Anspruch 4, **gekennzeichnet durch** einen Sirupbehälter (40), dessen Innenraum beim Entleeren volumenkompressibel ist.

8. Milchschaumdüse (1) nach Anspruch 7, **gekennzeichnet durch** einen flexiblen Sirupbehälter (40).

## Claims

1. Removable milk foaming nozzle (1) for a fully automatic coffee machine for domestic use with a steam nozzle (10) as a first input (12) for a pressurised steam supply, with a second input (14) for a milk supply, with a third input (16) for an air supply, with an output (26) in the direction of a beverage vessel and a further input (18) for a syrup supply, **characterised in that** all inputs (12, 14, 16, 18) lead into a vacuum chamber (20), which has a bottleneck (22) on the output side, wherein the bottleneck (22) lies downstream of the steam nozzle (10) and upstream of a mixing chamber (24) in the direction of flow of the steam, wherein the mixing chamber (24) leads into the output (26) downstream.

2. Milk foaming nozzle (1) according to claim 1, **characterised in that** the vacuum chamber (20) is integrated into the milk foaming nozzle (1) as a container filled with syrup at the factory.

3. Milk foaming nozzle (1) according to claim 1 or 2 with a separate syrup container (40), **characterised by** a fluid coupling apparatus (28) of the syrup container (40) with the milk foaming nozzle (1).

4. Milk foaming nozzle (1) according to claim 3, **characterised in that** the syrup container (40) can be inserted into and removed from the milk foaming nozzle (1) as a component of the second input or as mixing chamber or as a vacuum chamber.

5. Milk foaming nozzle (1) according to claim 3, **characterised by** a pump apparatus, by way of which syrup can be pumped into the vacuum chamber (20) via the further input (18).

6. Milk foaming nozzle (1) according to claim 3 or 5, **characterised by** a dosing apparatus in the syrup container (40).

7. Milk foaming nozzle according to claim 4, **characterised by** a syrup container (40), the interior of which can have its volume compressed when emptying.

8. Milk foaming nozzle (1) according to claim 7, **characterised by** a flexible syrup container (40).

## Revendications

1. Buse amovible de mousse de lait (1) pour une machine à café entièrement automatique à usage domestique, comprenant une buse de vapeur (10) en tant qu'une première entrée (12) pour une amenée de vapeur sous pression, comprenant une deuxième entrée (14) pour une amenée de lait, comprenant une troisième entrée (16) pour une amenée d'air, comprenant une sortie (26) en direction d'un récipient pour boisson et une entrée supplémentaire (18) pour une amenée de sirop, **caractérisée en ce que** toutes les entrées (12, 14, 16, 18) aboutissent dans une chambre de dépression (20) qui présente un rétrécissement (22) côté sortie, le rétrécissement (22), en direction d'écoulement de la vapeur, étant situé en aval de la buse de vapeur (10) et en amont d'une chambre de mélange (24), la chambre de mélange (24) aboutissant dans la sortie (26) en aval.

2. Buse de mousse de lait (1) selon la revendication 1, **caractérisée en ce que** la chambre de dépression (20) est intégrée dans la buse de mousse de lait en tant que réservoir rempli de sirop côté usine.

3. Buse de mousse de lait (1) selon la revendication 1 ou 2, comprenant un réservoir de sirop (40) séparé, **caractérisée par** un dispositif d'accouplement (28) fluidique du réservoir de sirop (40) à la buse de mousse de lait (1).

4. Buse de mousse de lait (1) selon la revendication 3, **caractérisée en ce que** le réservoir de sirop (40) peut être inséré dans la buse de mousse de lait (1) et en être retiré en tant que composant de la deuxième entrée ou en tant que chambre de mélange ou en tant que chambre de dépression.

5. Buse de mousse de lait (1) selon la revendication 3, **caractérisée par** un dispositif de pompage à l'aide duquel le sirop peut être pompé dans la chambre de dépression (20) par l'intermédiaire de l'entrée supplémentaire (18).

6. Buse de mousse de lait (1) selon la revendication 3 ou 5, **caractérisée par** un dispositif de dosage dans le réservoir de sirop (40).

7. Buse de mousse de lait (1) selon la revendication 4, **caractérisée par** un réservoir de sirop (40) dont l'espace intérieur est compressible en volume lors de la vidange.

8. Buse de mousse de lait (1) selon la revendication 7, **caractérisée par** un réservoir de sirop (40) flexible.
